# EUROPEAN PATENT APPLICATION

(11) **EP 4 564 907 A1**
(43) Date of publication of application: **04.06.2025**
(21) Application number: 22952350.1
(22) Date of filing: 27.07.2022
(51) Int. Cl.: H04W 36/00

(54) **TIMING ADVANCE MAINTENANCE METHOD AND APPARATUS, TERMINAL BEHAVIOR DETERMINATION METHOD AND APPARATUS, AND STORAGE MEDIUM**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: Dehns Germany Partnerschaft mbB
(86) International application number: PCT/CN2022/108359
(87) International publication number: WO 2024/020888

(57) **Abstract**

The present disclosure provides a timing advance maintenance method and apparatus, a terminal behavior determination method and apparatus, and a storage medium. The timing advance maintenance method comprises: in response to determining that a target candidate cell configuration used by a terminal is changed to be unavailable, reserving or discarding TA corresponding to a target candidate cell.

## Description

### TECHNICAL FIELD

The present disclosure relates to the communication technical field, and in particular to an uplink timing maintenance method, a terminal behavior determination method and apparatus, and a storage medium.

### BACKGROUND

If a network side device configures one or more candidate cell configurations (or one or more candidate cell group configurations) for a terminal, the terminal may change a candidate cell configuration (or a candidate cell group configuration) corresponding to a serving cell (or a serving cell group) according to Layer 1 (L1) or Layer 2 (L2) activation signaling or deactivation signaling sent by the network side device, or the terminal may change the candidate cell configuration (or candidate cell group configuration) according to a pre-configured trigger event. However, how the terminal processes uplink timing (Timing Advance, TA) of candidate cell(s) (or candidate cell group(s)) corresponding to respective candidate cell configuration(s) (or candidate cell group configuration(s)) is a problem that needs to be solved.

### SUMMARY

In order to overcome the problem(s) existing in related art, embodiments of the present disclosure provide an uplink timing maintenance method, a terminal behavior determination method and apparatus, and a storage medium.

According to a first aspect of embodiments of the present disclosure, there is provided an uplink timing maintenance method. The method is performed by a terminal, and the method includes:
in response to determining that a target candidate cell configuration used by the terminal is changed to unavailable, keeping or discarding a TA corresponding to a target candidate cell.

Optionally, determining that the target candidate cell configuration used by the terminal is changed to unavailable includes any one of:
in response to determining that the target candidate cell configuration is deactivated, determining that the target candidate cell configuration is changed to unavailable;
in response to receiving stop-using indication information sent by a network side device, determining that the target candidate cell configuration is changed to unavailable, wherein the stop-using indication information is used to indicate the terminal to stop using the target candidate cell configuration.

Optionally, the method further includes any one of:
in response to receiving change indication information sent by the network side device, triggering the terminal to deactivate the target candidate cell configuration, wherein the change indication information is used to indicate the terminal to change the candidate cell configuration used;
in response to determining that a preset condition for a candidate cell configuration change is met, triggering the terminal to deactivate the target candidate cell configuration.

Optionally, keeping or discarding the TA corresponding to the target candidate cell includes:
keeping or discarding the TA corresponding to the target candidate cell based on the network configuration indication information sent by a network side device, wherein the network configuration indication information is used to indicate the terminal to keep or discard the TA corresponding to the target candidate cell; or
based on a protocol agreement, keeping or discarding the TA corresponding to the target candidate cell.

Optionally, keeping or discarding the TA corresponding to the target candidate cell includes:
according to whether there is an activated candidate cell in a target uplink timing group TAG, keeping or discarding the TA corresponding to the target candidate cell, wherein the target TAG is a TAG where the target candidate cell is located.

Optionally, keeping or discarding the TA corresponding to the target candidate cell according to whether there is the activated candidate cell in the target uplink timing group TAG includes:
in response to determining that there is the activated candidate cell in the target TAG, keeping the TA corresponding to the target candidate cell; and in response to determining that there is no activated candidate cell in the target TAG, discarding the TA corresponding to the target candidate cell.

Optionally, keeping or discarding the TA corresponding to the target candidate cell includes:
keeping or discarding the TA corresponding to the target candidate cell according to a cell type of the target candidate cell.

Optionally, keeping or discarding the TA corresponding to the target candidate cell according to the cell type of the target candidate cell includes:
when the cell type of the target candidate cell is a Secondary Cell (SCell), keeping the TA corresponding to the target candidate cell;
when the cell type of the target candidate cell is a Primary Cell (PCell) or a Primary Secondary Cell (PSCell), discarding the TA corresponding to the target candidate cell.

Optionally, keeping the TA corresponding to the target candidate cell includes at least one of the following:
controlling a Time Alignment Timer (TAT) to continue running;
controlling the TAT to stop running, but keeping a TA value corresponding to the target candidate cell.

Optionally, discarding the TA corresponding to the target candidate cell includes at least one of:
controlling a TAT to stop running;
determining that the TAT expires;
discarding a TA value corresponding to the target candidate cell;
controlling the TAT to stop running, and discarding the TA value corresponding to the target candidate cell;
determining that the TAT expires, and discarding the TA value corresponding to the target candidate cell.

According to a second aspect of embodiments of the present disclosure, there is provided a terminal behavior determination method. The method is performed by a network side device, and the method includes:
determining that a terminal keeps or discards uplink timing TA corresponding to a target candidate cell.

Optionally, the method further includes:
sending change indication information to the terminal, wherein the change indication information is used to indicate the terminal to change a candidate cell configuration used.

Optionally, the method further includes:
sending stop-using indication information to the terminal, wherein the stop-using indication information is used to indicate the terminal to stop using a target candidate cell configuration.

Optionally, determining that the terminal keeps or discards the uplink timing TA corresponding to the target candidate cell includes:
determining, based on network configuration indication information sent by the network side device to the terminal, that the terminal keeps or discards the TA corresponding to the target candidate cell, wherein the network configuration indication information is used to indicate the terminal to keep or discard the TA corresponding to the target candidate cell; or
based on a protocol agreement, determining that the terminal keeps or discards the TA corresponding to the target candidate cell.

Optionally, determining that the terminal keeps or discards the uplink timing TA corresponding to the target candidate cell includes:
according to whether there is an activated candidate cell in a target uplink timing group TAG, determining that the terminal keeps or discards the TA corresponding to the target candidate cell, wherein the target TAG is a TAG where the target candidate cell is located.

Optionally, determining that the terminal keeps or discards the TA corresponding to the target candidate cell according to whether there is the activated candidate cell in the target uplink timing group TAG includes:
in response to determining that there is the activated candidate cell in the target uplink timing group TAG, determining that the terminal keeps the TA corresponding to the target candidate cell, wherein the target TAG is the TAG where the target candidate cell is located;
in response to determining that there is no activated candidate cell in the target TAG, determining that the terminal discards the TA corresponding to the target candidate cell.

Optionally, determining that the terminal keeps or discards the uplink timing TA corresponding to the target candidate cell includes:
determining, according to a cell type of the target candidate cell, that the terminal keeps or discards the TA corresponding to the target candidate cell.

Optionally, determining, according to the cell type of the target candidate cell, that the terminal keeps or discards the TA corresponding to the target candidate cell includes:
when the cell type of the target candidate cell is a Secondary Cell (SCell), determining that the terminal keeps the TA corresponding to the target candidate cell;
when the cell type of the target candidate cell is a Primary Cell (PCell) or a Primary Secondary Cell (PSCell), determining that the terminal discards the TA corresponding to the target candidate cell.

Optionally, determining that the terminal keeps the uplink timing TA corresponding to the target candidate cell includes at least one of:
determining that the terminal controls a Timing Alignment Timer (TAT) to continue running;
determining that the terminal controls the TAT to stop running but keeps a TA value corresponding to the target candidate cell.

Optionally, determining that the terminal discards the uplink timing TA corresponding to the target candidate cell includes at least one of:
determining that the terminal controls a TAT to stop running;
determining that the terminal determines that the TAT expires;
determining that the terminal discards a TA value corresponding to the target candidate cell;
determining that the terminal controls the TAT to stop running and discard the TA value corresponding to the target candidate cell;
determining that the terminal determines that the TAT expires and discards the TA value corresponding to the target candidate cell.

According to a third aspect of embodiments of the present disclosure, there is provided an uplink timing maintenance apparatus. The apparatus is applied to a terminal, and the apparatus includes:
a maintenance module configured to, in response to determining that a target candidate cell configuration used by the terminal is changed to unavailable, keep or discard a TA corresponding to a target candidate cell.

According to a fourth aspect of embodiments of the present disclosure, there is provided a terminal behavior determination apparatus. The apparatus is applied to a network side device, and the apparatus includes:
a determination module configured to determine that the terminal maintains or discards uplink timing TA corresponding to a target candidate cell.

According to a fifth aspect of embodiments of the present disclosure, there is provided a computer-readable storage medium. The storage medium stores a computer program, and the computer program is configured to perform the uplink timing maintenance method at the terminal side according to any one of the above embodiments.

According to a sixth aspect of embodiments of the present disclosure, there is provided a computer-readable storage medium. The storage medium stores a computer program, and the computer program is configured to perform the terminal behavior determination method at the network side device according to any one of the above embodiments.

According to a seventh aspect of embodiments of the present disclosure, there is provided an uplink timing maintenance apparatus, including:
a processor; and
a memory configured to store instructions executable by the processor;
wherein the processor is configured to perform the uplink timing maintenance method at the terminal side according to any one of the above embodiments.

According to an eighth aspect of embodiments of the present disclosure, there is provided a terminal behavior determination apparatus, including:
a processor; and
a memory configured to store instructions executable by the processor;
wherein the processor is configured to perform the terminal behavior determination method at the network side device according to any one of the above embodiments.

It is to be understood that the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the present disclosure.
FIG. 1 is a schematic flowchart of an uplink timing TA maintenance method according to an example embodiment.
FIG. 2 is a schematic flowchart of another uplink timing TA maintenance method according to an example embodiment.
FIG. 3 is a schematic flowchart of another uplink timing TA maintenance method according to an example embodiment.
FIG. 4 is a schematic flowchart of another terminal behavior determination method according to an example embodiment.
FIG. 5 is a schematic flowchart of another terminal behavior determination method according to an example embodiment.
FIG. 6 is a schematic flowchart of another terminal behavior determination method according to an example embodiment.
FIG. 7 is a block diagram of an uplink timing TA maintenance apparatus according to an example embodiment.
FIG. 8 is a block diagram of a terminal behavior determination apparatus according to an example embodiment.
FIG. 9 is a schematic diagram of a structure of an uplink timing TA maintenance apparatus according to an example embodiment of the present disclosure.
FIG. 10 is a schematic diagram of a structure of a terminal behavior determination apparatus according to an example embodiment of the present disclosure.

### DETAILED DESCRIPTION

Example embodiments will be described in detail herein, examples of which are shown in the accompanying drawings. When the following description refers to the drawings, the same numbers in different drawings represent the same or similar elements unless otherwise indicated. The implementations described in the following example embodiments do not represent all implementations consistent with the present disclosure. Instead, they are merely examples of apparatuses and methods consistent with some aspects of the present disclosure as detailed in the appended claims.

The terms used in the present disclosure are for the purpose of describing example embodiments only and are not intended to limit the present disclosure. The singular forma of "a/an", "said" and "the" used in the present disclosure and the appended claims are also intended to include plural forms unless the context clearly indicates otherwise. It should also be understood that the term "and/or" used herein refers to and includes any or all possible combinations of at least one associated listed item.

It should be understood that although the terms first, second, third, etc. may be used in the present disclosure to describe various information, such information should not be limited to these terms. These terms are only used to distinguish the same type of information from each other. For example, without departing from the scope of the present disclosure, first information may also be referred to as second information, and similarly, second information may also be referred to as the first information. Depending on the context, the word "if" as used herein may be interpreted as "when" or "in a case where..." or "in response to determining...".

Before introducing the solutions provided by the present disclosure, dynamic cell (or dynamic cell group) change is first introduced.

In the 5th Generation Mobile Communication Technology (5G) system, a network side device can provide multiple candidate cells (or candidate cell groups) to a terminal. The network side device can subsequently control the terminal to make a change between multiple candidate cells (or candidate cell groups) through L1 or L2 signaling, for example, changing the working cell (or working cell group) from candidate cell#1 (or candidate cell group#1) to candidate cell#2 (or candidate cell group#2).

The L1 signaling includes but is not limited to Downlink Control Information (DCI), and the L2 signaling includes but is not limited to Media Access Control Element (MAC CE).

One serving cell (or serving cell group) may correspond to one or more candidate cells (or candidate cell groups).

In the 5G system, due to the use of Dual Connectivity (DC) architecture, two cell (or cell groups) groups are included:
a Master Cell Group (MCG), corresponding to a Master Node (MN) at the network side;
a Secondary Cell Group (SCG), corresponding to a Secondary Node (SN) at the network side.

The MCG includes one Primary Cell (PCell) and one or more Secondary Cells (SCells). The SCG includes one Primary Secondary Cell (PSCell) and one or more SCells. The PCell and PSCell may be collectively referred to as Special Cell (SpCell).

In the current system, each cell (or cell group) is assigned with a serving cell configuration (or serving cell group configuration), i.e., ServingCellConfig. The serving cell configuration (or serving cell group configuration) is associated with a serving cell identity (or serving cell group identity), i.e., ServCellIndex, which is used to uniquely identify a serving cell (or serving cell group) within the terminal. The serving cell (or serving cell group) identity of PCell is "0". A serving cell (or serving cell group) is associated with a Hybrid Automatic Repeat Request (HARQ) entity, and the HARQ entity includes multiple
HARQ processes.

In addition, in the 5G system, the terminal can change the serving cell (or serving cell group) based on a condition pre-configured by the network side and a pre-configured cell (or cell group) corresponding to the condition. For example, when the terminal meets the pre-configured condition, such as a specific measurement event, the terminal changes the serving cell (or serving cell group) to the pre-configured cell (or cell group). The mobility procedure triggered by the condition includes at least one of the following:
Conditional Handover (CHO);
Conditional primary secondary cell (or cell group) addition (Conditional PSCell Addition, CPA);
Conditional primary secondary cell (or cell group) change (Conditional PSCell Change, CPC).

The terminal may also change a specific cell configuration (or cell group configuration) after a pre-configured condition is met according to an indication of the network side device. For example, the PCell configuration of the terminal is changed from a candidate cell configuration#1 (or candidate cell group configuration#1) to a candidate cell configuration#2 (or candidate cell group configuration#2).

The following describes TA.

After a terminal receives a downlink signal, the terminal can determine the position of a downlink signal subframe. In order to avoid uplink interference, the network side device need to ensure that signals sent by different terminals arrive at the network side device at a fixed time. Therefore, the network side device needs to configure an uplink timing advance (i.e. TA) for the uplink transmission of the terminal. After receiving the TA value, if the terminal needs to send an uplink signal, the terminal sends the uplink signal by the TA value in advance with the downlink subframe position as a reference.

Regarding the obtaining of the TA value, the terminal needs to obtain the TA value only when it is out of synchronization in the uplink. Therefore, the terminal may trigger itself or the network side may trigger the terminal to initiate a random access procedure. The PRACH channel for sending a random access request message in the random access procedure adopts an initial default TA value specified in a protocol, for example, TA=0. The network side sends a TA value to the terminal in a random access response.

Regarding the maintenance of the TA value, since the location of the terminal is constantly changing, it is needed to maintain the validity of the TA value. Regarding the maintenance of the TA value, the network side may set a Time Alignment Timer (TAT) for the TA value of the terminal. The TAT starts when a TA command is sent to the terminal. Before the timer expires, the network side device sends a new TA value to the terminal. According to the timer set by the network side device, the terminal starts or restarts the TAT when receiving a TA value. After the timer expires, the TA value is considered invalid, and the terminal is in an uplink out-of-sync state, and can no longer send uplink signals in the cell with the uplink out-of-sync.

Since the terminal may be configured with multiple cells and the TAs of different cells may be different, cells with different TA values can be divided into different TA groups (TAG). A TAG formed by cells having the same TA as a SpCell is a Primary TA Group (PTAG), and a TAG formed by cells having the same TA as a SCell is a Secondary TA Group (STAG).

When the PTAG TAT expires, the terminal behavior includes at least one of the following:
flushing HARQ buffers for all serving cells;
notifying a Radio Resource Control (RRC) layer to release Physical Uplink Control Channel (PUCCH) resources for all serving cells;
notifying the RRC layer to release Sounding Reference Signal (SRS) resources for all serving cells ;
clearing configured downlink assignment(s) and configured uplink grant(s);
clearing Physical Uplink Shared Channel (PUSCH) resource(s) for semi-persistent Channel State Information (CSI) reporting;
considering all running TAT timers as expired;
maintaining TA values N_{TA} of all TAGs.

All TAGs include but are not limited to PTAG and STAG.

When STAG TAT expires, for a cell belonging to the STAG, the terminal behavior includes at least one of the following:
flushing all HARQ buffers;
notifying the RRC layer to release PUCCH resource(s);
notifying the RRC layer to release SRS resource(s);
clearing configured downlink assignment(s) and configured uplink grant(s);
clearing PUSCH resources(s) for semi-persistent CSI reporting;
maintaining the TA value N_{TA} of the STAG.

In order to solve the technical problem of the present disclosure, the present disclosure provides the following uplink timing maintenance, terminal behavior determination method and apparatus, storage medium, to ensure that a network side device and a terminal have a consistent understanding of the uplink timing maintenance status of the terminal, and the solutions have high availability.

It should be noted that a candidate cell involved in the embodiments of the present disclosure may refer to a candidate cell or a candidate cell group, and the present disclosure does not limit this.

The following first introduces the uplink timing TA maintenance method provided by the present disclosure from the perspective of the terminal side.

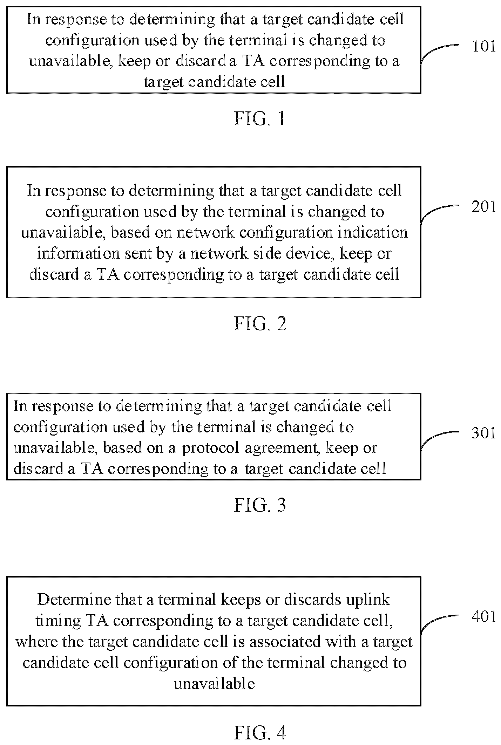

An embodiment of the present disclosure provides an uplink timing TA maintenance method. As shown in FIG. 1, FIG. 1 is a flowchart of an uplink timing TA maintenance method according to an embodiment. The method may be performed by a terminal. The method may include the following steps:

In step 101, in response to determining that a target candidate cell configuration used by the terminal is changed to unavailable, a TA corresponding to a target candidate cell is kept or discarded.

In an embodiment of the present disclosure, the target candidate cell is associated with the target candidate cell configuration, and the target candidate cell configuration is a candidate cell configuration which is currently used by the terminal. If the target candidate cell configuration includes a configuration for a candidate cell, the candidate cell is the target candidate cell, and the target candidate cell is associated with the target candidate cell configuration.

In an embodiment of the present disclosure, the network side device may provide one or more candidate cell configurations for the terminal.

In a possible implementation, the network side device may provide one or more candidate cell configurations for the terminal through an RRC reconfiguration (RRCReconfiguration) message.

Based on the candidate cell configuration(s) provided by the network side, when the target candidate cell configuration currently in use changes and becomes unavailable, the terminal may keep or discard the TA corresponding to the target candidate cell associated with the target candidate cell configuration.

In a possible implementation, if the terminal determines that the target candidate cell configuration is deactivated, the terminal determines that the target candidate cell configuration is changed to unavailable.

Specifically, if the terminal receives change indication information sent by the network side device, the change indication message is used to indicate the terminal to change the candidate cell configuration used, for example, the change indication information indicates that a candidate cell configuration corresponding to the PCell of the terminal is changed from the target candidate cell configuration being used (for example, candidate cell configuration#1) to candidate cell configuration #2, then the change indication information can trigger the terminal to deactivate the target candidate cell configuration. After the target candidate cell is deactivated, the terminal can determine that the target candidate cell configuration has been changed to unavailable, and at this time the terminal can execute the behavior of changing the target candidate cell configuration to unavailable.

The change indication information may be Downlink Control Information (DCI), MAC CE, or a RRC message.

Specifically, if the terminal determines that a preset condition for changing the candidate cell configuration is met (for example, a measurement result of the terminal for the Pcell meets an A3 event, the terminal determines that the preset condition is met), the terminal is triggered to deactivate the target candidate cell configuration. After the target candidate cell is deactivated, the terminal can determine that the target candidate cell configuration is changed to unavailable. At this time, the terminal can execute the behavior of changing the target candidate cell configuration to unavailable.

In another possible implementation, if the terminal receives stop-using indication information sent by the network side device (the stop-using indication information is used to indicate the terminal to stop using the target candidate cell configuration), the terminal can determine that the target candidate cell configuration is changed to unavailable in this case. The terminal can perform the behavior of changing the target candidate cell configuration to unavailable.

Of course, the above is only description of examples, and the terminal may also determine that the target candidate cell configuration currently used is changed to unavailable based on other situation(s).

In an embodiment of the present disclosure, the terminal's behavior of changing the target candidate cell configuration to unavailable includes but is not limited to at least one of the following: changing the candidate cell configuration corresponding to the target candidate cell; deactivating the target candidate cell configuration.

For example, when changing the candidate cell configuration corresponding to the target candidate cell, the candidate cell configuration corresponding to the PCell of the terminal may be changed from the target candidate cell configuration (i.e., candidate cell configuration #1) to candidate cell configuration #2.

For another example, when the target candidate cell configuration is deactivated, the target candidate cell configuration (i.e., candidate cell configuration #1) corresponding to the PCell of the terminal may be deactivated.

In an embodiment of the present disclosure, once the terminal changes the target candidate cell configuration to unavailable, the terminal may be triggered to keep or discard the TA corresponding to the target candidate cell.

In the above embodiments, when the target candidate cell configuration used by the terminal is changed to unavailable, the terminal can process the uplink timing, so as to perform maintenance of the uplink timing at the terminal, and the method has high availability.

In some optional embodiments, as shown in FIG. 2, FIG. 2 is a flowchart of an uplink timing TA maintenance method according to an embodiment. The method may be performed by a terminal. The method may include the following steps:

In step 201, in response to determining that a target candidate cell configuration used by the terminal is changed to unavailable, based on network configuration indication information sent by a network side device, a TA corresponding to a target candidate cell is kept or discarded.

In the embodiment of the present disclosure, determining that the target candidate cell configuration used by the terminal is changed to unavailable, and the behavior of deactivating the target candidate cell configuration performed by the terminal are the same as those described in the above step 101, which will not be repeated here.

In the embodiment of the present disclosure, when the terminal determines that the target candidate cell configuration used by the terminal is changed to unavailable, the TA corresponding to the target candidate cell can be kept or discarded based on the network configuration indication information sent by the network side device. The network configuration indication information is used to indicate the terminal to keep or discard the TA corresponding to the target candidate cell.

In a possible implementation, the network configuration indication information is used to indicate the terminal to keep or discard the TA corresponding to the target candidate cell according to whether there is an activated candidate cell in a target TAG.

Correspondingly, based on the network configuration indication information, when there is an activated candidate cell in the target uplink timing group TAG, the terminal keeps the TA corresponding to the target candidate cell. The target TAG is a TAG where the target candidate cell is located.

For example, the target candidate cell configuration of SCell#1 being used by the terminal is candidate cell configuration #1, the target TAG which SCell#1 belongs to is STAG#1, and STAG#1 includes SCell#1 and SCell#2. Further, SCell#2 is still activated, and the terminal can keep the TA corresponding to STAG#1.

The terminal may also, based on the network configuration indication information, discard the TA corresponding to the target candidate cell when there is no activated candidate cell in the target uplink timing group TAG. The target TAG is a TAG where the target candidate cell is located.

For example, the target candidate cell configuration of SCell#1 being used by the terminal is candidate cell configuration #1, the target TAG which SCell#1 belongs to is STAG#1, and STAG#1 includes SCell#1 and SCell#2. Further, SCell#2 is not activated and used, and the terminal can discard the TA corresponding to STAG#1.

In another possible implementation, the network configuration indication information is used to indicate the terminal to keep or discard the TA corresponding to the target candidate cell according to a cell type of the target candidate cell.

Correspondingly, based on the network configuration indication information, when the cell type of the target candidate cell is a Secondary Cell (SCell), the terminal keeps the TA corresponding to the target candidate cell.

When the cell type of the target candidate cell is a Primary Cell (PCell) or a Primary Secondary Cell (PSCell), the TA corresponding to the target candidate cell is discarded.

In a possible implementation, keeping the TA corresponding to the target candidate cell may include but is not limited to at least one of the following: controlling a Time Alignment Timer (TAT) to continue running; controlling the TAT to stop running but keeping the TA value corresponding to the target candidate cell.

For example, the terminal keeps the TA corresponding to STAG#1, and the terminal can control the TAT to continue running, and/or control the TAT to stop running but keep the TA value corresponding to STAG#1.

In a possible implementation, discarding the TA corresponding to the target candidate cell may include but is not limited to at least one of the following: controlling the TAT to stop running; determining that the TAT expires; discarding the TA value corresponding to the target candidate cell; controlling the TAT to stop running and discarding the TA value corresponding to the target candidate cell; determining that the TAT expires and discarding the TA value corresponding to the target candidate cell.

For example, regarding discarding the TA corresponding to STAG#1, the terminal may perform at least one of the following: controlling the TAT to stop running; determining that the TAT expires; discarding the TA value corresponding to STAG#1; controlling the TAT to stop running and discarding the TA value corresponding to STAG#1; determining that the TAT expires and discarding the TA value corresponding to STAG#1.

In the above embodiments, when the target candidate cell configuration used by the terminal is changed to unavailable, the terminal can process the uplink timing based on the network configuration indication information sent by the network side device, thereby achieving the maintenance purpose of the uplink timing by the terminal, and the method has high availability.

In some optional embodiments, referring to FIG. 3, FIG. 3 is a flowchart of an uplink timing TA maintenance method according to an embodiment. The method may be performed by a terminal. The method may include the following steps:

In step 301, in response to determining that a target candidate cell configuration used by the terminal is changed to unavailable, based on a protocol agreement, a TA corresponding to a target candidate cell is kept or discarded.

In the embodiment of the present disclosure, determining that the target candidate cell configuration used by the terminal is changed to unavailable, and the behavior of deactivating the target candidate cell configuration performed by the terminal are the same as those described in the above step 101, which will not be repeated here.

In the embodiment of the present disclosure, when the terminal determines that the target candidate cell configuration used by the terminal is changed to unavailable, the TA corresponding to the target candidate cell may be kept or discarded based on a protocol agreement.

In a possible implementation, the protocol stipulates that the terminal keeps or discards the TA corresponding to the target candidate cell according to whether there is an activated candidate cell in the target TAG.

Accordingly, based on the protocol agreement, when there is an activated candidate cell in the target TAG, the terminal keeps the TA corresponding to the target candidate cell. The target TAG is a TAG where the target candidate cell is located.

For example, the target candidate cell configuration of SCell#1 being used by the terminal is candidate cell configuration #1, the target TAG which SCell#1 belongs to is STAG#1, and STAG#1 includes SCell#1 and SCell#2. Further, SCell#2 is still activated, and the terminal can keep the TA corresponding to STAG#1.

The terminal may also discard the TA corresponding to the target candidate cell when there is no activated candidate cell in the target uplink timing group TAG based on the protocol agreement. The target TAG is a TAG where the target candidate cell is located.

For example, the target candidate cell configuration of SCell#1 being used by the terminal is candidate cell configuration #1, the target TAG which SCell#1 belongs to is STAG#1, and STAG#1 includes SCell#1 and SCell#2. Further, SCell#2 is not activated and used, and the terminal can discard the TA corresponding to STAG#1.

In another possible implementation, the protocol stipulates that the terminal keeps or discards the TA corresponding to the target candidate cell according to the cell type of the target candidate cell.

Correspondingly, based on the protocol agreement, when the cell type of the target candidate cell is a Secondary Cell (SCell), the terminal keeps the TA corresponding to the target candidate cell.

When the cell type of the target candidate cell is a Primary Cell (PCell) or a Primary Secondary Cell (PSCell), the TA corresponding to the target candidate cell is discarded.

In a possible implementation, keeping the TA corresponding to the target candidate cell may include but is not limited to at least one of the following: controlling the Time Alignment Timer (TAT) to continue running; controlling the TAT to stop running but keeping the TA value corresponding to the target candidate cell.

In one possible implementation, discarding the TA corresponding to the target candidate cell may include but is not limited to at least one of the following: controlling the TAT to stop running; determining that the TAT expires; discarding the TA value corresponding to the target candidate cell; controlling the TAT to stop running and discarding the TA value corresponding to the target candidate cell; determining that the TAT expires and discarding the TA value corresponding to the target candidate cell.

In the above embodiments, when the target candidate cell configuration used by the terminal is changed to unavailable, the terminal can process the uplink timing based on the protocol agreement, thereby achieving the maintenance purpose of the uplink timing by the terminal, and the method has high availability.

Next, the terminal behavior determination method provided by the present disclosure is introduced from the perspective of the network side device side.

An embodiment of the present disclosure provides a terminal behavior determination method. As shown in FIG. 4, FIG. 4 is a flowchart of a terminal behavior determination method according to an embodiment. The method may be performed by a network side device. The network side device includes but is not limited to a 4G base station, a 5G base station, a MN, a SN, etc. The method may include the following steps:

In step 401, it is determined that a terminal keeps or discards uplink timing TA corresponding to a target candidate cell, where the target candidate cell is associated with a target candidate cell configuration of the terminal changed to unavailable.

In an embodiment of the present disclosure, the target candidate cell is associated with the target candidate cell configuration, and the target candidate cell configuration is a candidate cell configuration which is currently used by the terminal. If the target candidate cell configuration includes a configuration of a candidate cell, the candidate cell is the target candidate cell, and the target candidate cell is associated with the target candidate cell configuration.

If the target candidate cell configuration currently used by the terminal is changed to unavailable, the network side device may determine that the terminal keeps or discards the TA corresponding to the target candidate cell associated with the target candidate cell configuration.

In an embodiment of the present disclosure, the network side device may provide one or more candidate cell configurations for the terminal.

In a possible implementation, the network side device may provide one or more candidate cell configurations to the terminal through an RRCReconfiguration message.

In a possible implementation, the network side device can send change indication information to the terminal. The change indication information is used to indicate the terminal to change the candidate cell configuration used. When the terminal receives the change indication information, the terminal is triggered to deactivate the target candidate cell configuration, thereby changing the target candidate cell configuration to unavailable.

In another possible implementation, when the network side device determines that the terminal meets a preset condition for changing the candidate cell configuration, it can be determined that the terminal side triggers deactivation of the target candidate cell configuration, and the target candidate cell configuration is changed to unavailable.

In another possible implementation, the network side device can send stop-using indication information to the terminal. The stop-using indication information is used to indicate the terminal to stop using the target candidate cell configuration. At this time, the network side device can determine that the terminal side changes the target candidate cell configuration to unavailable based on the stop-using indication message.

In an embodiment of the present disclosure, when the network side device determines that the target candidate cell configuration which is currently used by the terminal has changed and has changed to unavailable, the network side device can, based on the network configuration indication information sent by the network side to the terminal or a protocol agreement, determine that the terminal keeps or discards the TA corresponding to the target candidate cell associated with the target candidate cell configuration.

In the above embodiments, the network side device can determine that the terminal keeps or discards the uplink timing TA corresponding to the target candidate cell based on the network configuration indication information sent by the network side to the terminal or the protocol agreement, thereby ensuring that the network side device and the terminal have a consistent understanding of the uplink timing maintenance status of the terminal, and the method has high availability.

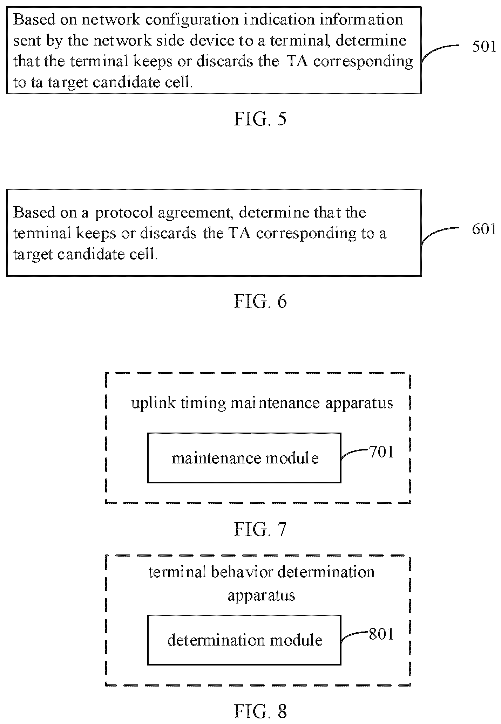

In some optional embodiments, referring to FIG. 5, FIG. 5 is a flowchart of a terminal behavior determination method according to an embodiment. The method may be performed by a network side device. The network side device includes but is not limited to a 4G base station, a 5G base station, a MN, a SN, etc. The method may include the following steps:

In step 501, based on network configuration indication information sent by the network side device to a terminal, it is determined that the terminal keeps or discards the TA corresponding to ta target candidate cell.

In an embodiment of the present disclosure, the target candidate cell is associated with a target candidate cell configuration, and the target candidate cell configuration is a candidate cell configuration which is currently used by the terminal. If the target candidate cell configuration includes a configuration of a candidate cell, the candidate cell is the target candidate cell, and the target candidate cell is associated with the target candidate cell configuration.

In an embodiment of the present disclosure, the network configuration indication information is used to indicate the terminal to keep or discard the TA corresponding to the target candidate cell.

In a possible implementation, the network configuration indication information is used to indicate the terminal to keep or discard the TA corresponding to the target candidate cell based on whether there is an activated candidate cell in the target TAG.

Accordingly, when the network side device determines that there is an activated candidate cell in the target uplink timing group TAG, it determines that the terminal keeps the TA corresponding to the target candidate cell. The target TAG is a TAG where the target candidate cell is located.

Alternatively, when the network side device determines that there is no activated candidate cell in the target uplink timing group TAG, it determines that the terminal discards the TA corresponding to the target candidate cell. The target TAG is the TAG where the target candidate cell is located.

In another possible implementation, the network configuration indication information is used to indicate the terminal to keep or discard the TA corresponding to the target candidate cell according to the cell type of the target candidate cell.

Correspondingly, when determining that the cell type of the target candidate cell is the Secondary Cell (SCell), the network side device determines that the terminal keeps the TA corresponding to the target candidate cell.

When the cell type of the target candidate cell is a Primary Cell (PCell) or a Primary Secondary Cell (PSCell), the network side device determines that the terminal discards the TA corresponding to the target candidate cell.

In a possible implementation, the network side device determining that the terminal keeps the uplink timing TA corresponding to the target candidate cell includes but not limited to at least one of the following: determining that the terminal controls the Time Alignment Timer (TAT) to continue running; determining that the terminal controls the TAT to stop running but keeps the TA value corresponding to the target candidate cell.

In a possible implementation, the network side device determining that the terminal discards the uplink timing TA corresponding to the target candidate cell includes but not limited to at least one of the following: determining that the terminal controls the TAT to stop running; determining that the terminal determines that the TAT expires; determining that the terminal discards the TA value corresponding to the target candidate cell; determining that the terminal controls the TAT to stop running and discards the TA value corresponding to the target candidate cell; determining that the terminal determines that the TAT expires and discards the TA value corresponding to the target candidate cell.

In the above embodiments, the network side device can determine that the terminal keeps or discards the uplink timing TA corresponding to the target candidate cell based on the network configuration indication information sent by the network side to the terminal, thereby ensuring that the network side device and the terminal have a consistent understanding of the uplink timing maintenance status of the terminal, and the method has high availability.

In some optional embodiments, referring to FIG. 6, FIG. 6 is a flowchart of a terminal behavior determination method according to an embodiment. The method may be performed by a network side device. The network side device includes but is not limited to a 4G base station, a 5G base station, a MN, a SN, etc. The method may include the following steps:

In step 601, based on a protocol agreement, it is determined that the terminal keeps or discards the TA corresponding to a target candidate cell.

In an embodiment of the present disclosure, the target candidate cell is associated with the target candidate cell configuration, and the target candidate cell configuration is a candidate cell configuration which is currently used by the terminal. If the target candidate cell configuration includes a configuration of a candidate cell, the candidate cell is the target candidate cell, and the target candidate cell is associated with the target candidate cell configuration.

In a possible implementation, the protocol stipulates that the terminal keeps or discards the TA corresponding to the target candidate cell based on whether there is an activated candidate cell in the target TAG.

Accordingly, when the network side device determines that there is an activated candidate cell in the target uplink timing group TAG, it determines that the terminal maintains the TA corresponding to the target candidate cell. The target TAG is a TAG where the target candidate cell is located.

Alternatively, when the network side device determines that there is no activated candidate cell in the target uplink timing group TAG, it determines that the terminal discards the TA corresponding to the target candidate cell. The target TAG is a TAG where the target candidate cell is located.

In another possible implementation, the protocol stipulates that the terminal keeps or discards the TA corresponding to the target candidate cell according to the cell type of the target candidate cell.

Accordingly, when the cell type of the target candidate cell is a Secondary Sell (SCell), the network side device may determine that the terminal keeps the TA corresponding to the target candidate cell.

When the cell type of the target candidate cell is a Primary Cell (PCell) or a Primary Secondary Cell (PSCell), the network side device may determine that the terminal discards the TA corresponding to the target candidate cell.

In a possible implementation, the network side device determining that the terminal maintains the uplink timing TA corresponding to the target candidate cell includes but not limited to at least one of the following: determining that the terminal controls the Time Alignment Timer (TAT) to continue running; determining that the terminal controls the TAT to stop running but keeps the TA value corresponding to the target candidate cell.

In a possible implementation, the network side device determining that the terminal discards the uplink timing TA corresponding to the target candidate cell includes but not limited to at least one of the following: determining that the terminal controls the TAT to stop running; determining that the terminal determines that the TAT expires; determining that the terminal discards the TA value corresponding to the target candidate cell; determining that the terminal controls the TAT to stop running and discards the TA value corresponding to the target candidate cell; determining that the terminal determines that the TAT expires and discards the TA value corresponding to the target candidate cell.

In the above embodiments, the network side device can determine that the terminal keeps or discards the uplink timing TA corresponding to the target candidate cell based on the protocol agreement, thereby ensuring that the network side device and the terminal have a consistent understanding of the uplink timing maintenance status of the terminal, and the method has high availability.

The methods provided by the present disclosure are further illustrated below with examples.

Embodiment 1, the method for maintaining uplink timing TA and determining terminal behavior includes the following steps:
In step 1, a network side device provides one or more candidate cell configurations to a terminal through an RRCReconfiguration message.

In step 2, the terminal processes the uplink timing according to the candidate cell configuration(s) in step 1 when the currently used target candidate cell configuration changes.

The trigger condition for the change of the target candidate cell configuration currently used by the terminal includes any of the following:
Condition 1: the terminal receives change indication information sent by the network side device, and the change indication information may be DCI, MAC CE, or an RRC message, for example, the PCell configuration of the terminal is changed from candidate cell configuration #1 to candidate cell configuration#2.

At this time, the terminal determines that the target candidate cell configuration (that is, candidate cell configuration #1) is changed to unavailable.

Condition 2: the terminal meets a preset condition for changing the candidate cell configuration.

For example, the measurement result of the terminal for the PCell satisfies an A3 event, and the PCell configuration of the terminal is changed from the candidate cell configuration#1 to the candidate cell configuration #2.

At this time, the terminal can also determine the target candidate cell configuration (that is, candidate cell configuration # 1) is changed to unavailable.

Condition 3: the terminal receives stop-using indication information sent by the network side device, where the stop-using indication information is used to indicate the terminal to stop using the target candidate cell configuration.

At this time, the terminal can also determine the target candidate cell configuration (that is, candidate cell configuration #1) is changed to unavailable.

In the embodiment of the present disclosure, the behavior of the terminal changing the target candidate cell configuration to unavailable includes but is not limited to at least one of the following: changing the candidate cell configuration corresponding to the target candidate cell; deactivating the target candidate cell configuration.

The terminal processing the uplink timing may include any of the following:
If the target candidate cell configuration is changed to unavailable, including but not limited to the target candidate cell configuration being deactivated or receiving the stop-using indication information sent by the network side device, the terminal keeps or discards the TA corresponding to the target candidate cell according to the network configuration indication information sent by the network side device or the protocol agreement.

For example, if the configuration of the PCell is changed from candidate cell configuration#1 to candidate cell configuration#2, the uplink timing of the target candidate cell associated with the target candidate cell configuration (i.e., candidate cell configuration#1) is kept or discarded.

Keeping the uplink timing corresponding to the target candidate cell includes at least one of the following: controlling the Time Alignment Timer (TAT) to continue running; controlling the TAT to stop running but keeping the TA value corresponding to the target candidate cell.

Discarding the TA corresponding to the target candidate cell includes at least one of the following: controlling the TAT to stop running; determining that the TAT expires; discarding the TA value corresponding to the target candidate cell; controlling the TAT to stop running and discarding the TA value corresponding to the target candidate cell; determining that the TAT expires and discarding the TA value corresponding to the target candidate cell.

If the target candidate cell configuration is changed to unavailable, according to the network configuration indication information sent by the network side device or the protocol agreement, if there is an activated candidate cell in the TAG corresponding to the target candidate cell, the terminal keeps the TA corresponding to the target candidate cell. Furthermore, the specific behavior of keeping the TA corresponding to the target candidate cell has been introduced before and will not be repeated here.

If the target candidate cell configuration is changed to unavailable, according to the network configuration indication information sent by the network side device or the protocol agreement, if there is no activated candidate cell in the TAG corresponding to the target candidate cell, the terminal discards the TA corresponding to the target candidate cell. Furthermore, the specific behavior of discarding the TA corresponding to the target candidate cell has been introduced before and will not be repeated here.

In the above embodiments, when the target candidate cell configuration used by the terminal is changed to unavailable, the terminal can process the uplink timing, and the network side device can determine that the terminal keeps or discards the TA corresponding to the target candidate cell based on the network configuration indication information sent by the network side device to the terminal or based on the protocol agreement, thereby ensuring that the network side device and the terminal have a consistent understanding of the uplink timing maintenance status of the terminal, and the methods have high availability.

Corresponding to the aforementioned application function implementation method embodiments, the present disclosure also provides application function implementation apparatus embodiments.

Referring to FIG. 7, FIG. 7 is a block diagram of an uplink timing maintenance apparatus according to an example embodiment. The apparatus is applied to a terminal and includes:
a maintenance module 701 configured to, in response to determining that a target candidate cell configuration used by the terminal is changed to unavailable, keep or discard a TA corresponding to the target candidate cell.

Referring to FIG. 8, FIG. 8 is a block diagram of a terminal behavior determination apparatus according to an example embodiment. The apparatus is applied to a network side device and includes:
a determination module 801 configured to determine that the terminal keeps or discards uplink timing TA corresponding to a target candidate cell.

For the apparatus embodiments, since they basically correspond to the method embodiments, for description of relevant parts, reference can be made to a part of description of the method embodiments. The apparatus embodiments described above are only schematic, and the units described above as separate components may or may not be physically separated, and the components displayed as units may or may not be physical units, that is, they may be located in one place, or they may be distributed on multiple network units. The purpose(s) of the solutions of the present disclosure can be achieved by selecting a part or all of the modules according to actual needs. A person of ordinary skill in the art can understand and implement the solutions without creative work.

Correspondingly, the present disclosure also provides a computer-readable storage medium, where the storage medium stores a computer program, and the computer program is configured to perform the uplink timing maintenance method at the terminal side according to any one of the above embodiments.

Correspondingly, the present disclosure also provides a computer-readable storage medium, where the storage medium stores a computer program, and the computer program is configured to perform the terminal behavior determination method at the network side device side according to any one of the above embodiments.

Accordingly, the present disclosure also provides an uplink timing maintenance apparatus, including:
a processor;
a memory configured to store instructions executable by the processor;
wherein the processor is configured to perform the uplink timing maintenance method at the terminal side according to any one of the above embodiments.

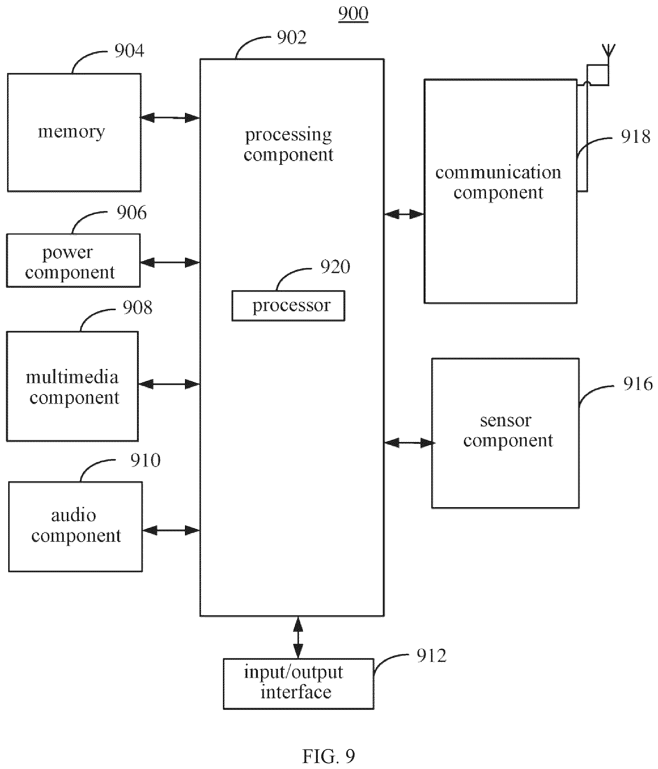

FIG. 9 is a block diagram of an uplink timing TA maintenance apparatus 900 according to an example embodiment. For example, the apparatus 900 may be a terminal such as a mobile phone, a tablet computer, an e-book reader, a multimedia player, a wearable device, vehicle-mounted user equipment , an iPad, a smart TV , etc.

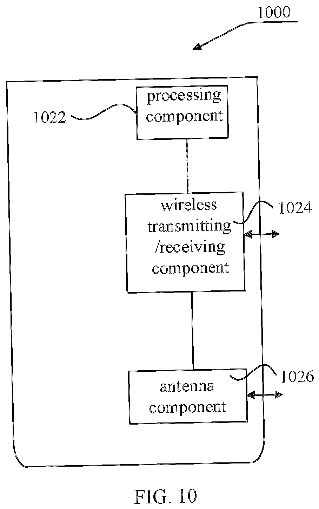

Referring to FIG. 10, the apparatus 900 may include one or more of the following components: a processing component 902, a memory 904, a power component 906, a multimedia component 908, an audio component 910, an input/output (I/O) interface 912, a sensor component 916, and a communication component 918.

The processing component 902 typically controls overall operations of the apparatus 900, such as the operations associated with display, telephone calls, data random access, camera operations, and recording operations. The processing component 902 may include one or more processors 920 to execute instructions to perform all or part of the steps in the above described uplink timing maintenance methods. Moreover, the processing component 902 may include one or more modules which facilitate the interaction between the processing component 902 and other components. For instance, the processing component 902 may include a multimedia module to facilitate the interaction between the multimedia component 908 and the processing component 902. For another example, the processing component 902 may read executable instructions from the memory to perform the steps of the uplink timing TA maintenance method provided by the above-described embodiments.

The memory 904 is configured to store various types of data to support the operation of the apparatus 900. Examples of such data include instructions for any applications or methods operated on the apparatus 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the apparatus 900. The power component 906 may include a power management system, one or more power sources, and any other components associated with the generation, management, and distribution of power in the apparatus 900.

The multimedia component 908 includes a screen providing an output interface between the apparatus 900 and the user. In some embodiments, the multimedia component 908 includes a front camera and/or a rear camera. The front camera and the rear camera may receive an external multimedia datum while the apparatus 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the apparatus 900 is in an operation mode, such as a call mode, a recording mode, and a voice recognition mode. The received audio signal may be further stored in the memory 904 or transmitted via the communication component 918. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 916 includes one or more sensors to provide status assessments of various aspects of the apparatus 900. For instance, the sensor component 916 may detect an open/closed status of the apparatus 900, relative positioning of components, e.g., the display and the keypad, of the apparatus 900, a change in position of the apparatus 900 or a component of the apparatus 900, a presence or absence of user contact with the apparatus 900, an orientation or an acceleration/deceleration of the apparatus 900, and a change in temperature of the apparatus 900. The sensor component 916 may include a proximity sensor configured to detect the presence of nearby objects without any physical contact. The sensor component 916 may also include a light sensor, such as a CMOS or CCD image sensor, for use in imaging applications. In some embodiments, the sensor component 916 may also include an accelerometer sensor, a gyroscope sensor, a magnetic sensor, a pressure sensor, or a temperature sensor.

The communication component 918 is configured to facilitate communication, wired or wirelessly, between the apparatus 900 and other devices. The apparatus 900 can access a wireless network based on a communication standard, such as WiFi, 2G, 3G, 4G, 5G or 6G, or a combination thereof. In one example embodiment, the communication component 918 receives a broadcast signal or broadcast associated information from an external broadcast management system via a broadcast channel. In one example embodiment, the communication component 918 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the uplink timing TA maintenance method at the terminal side according to any one of the embodiments.

In example embodiments, there is also provided a non-transitory machine-readable storage medium including instructions, such as the memory 904 including instructions executable by the processor 920 in the apparatus 900, for performing the above-described uplink timing TA maintenance methods. For example, the non-transitory computer-readable storage medium may be a ROM, a Random Access Memory (RAM), a CD-ROM, a magnetic tape, a floppy disc, an optical data storage device, and the like.

Correspondingly, the present application provides a terminal behavior determination apparatus, including:
a processor; and
a memory configured to store instructions executable by the processor;
where the processor is configured to perform the terminal behavior determination method at the network side device side according to any one of the above embodiments.

As shown in FIG. 10, FIG. 10 is a schematic diagram of a structure of a terminal behavior determination apparatus 1000 according to an example embodiment. The apparatus 1000 may be provided as a network side device. Referring to FIG. 10, the apparatus 1000 includes a processing component 1022, a wireless transmitting/receiving component 1024, an antenna component 1026 and a signal processing part specific to a wireless interface. The processing component 1022 may further include at least one processor.

One of the processors in the processing component 1022 may be configured to perform any of the terminal behavior determination methods described above.

Other embodiments of the present disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An uplink timing TA maintenance method, performed by a terminal, the method comprising:
in response to determining that a target candidate cell configuration used by the terminal is changed to unavailable, keeping or discarding a TA corresponding to a target candidate cell.

2. The method according to claim 1, wherein determining that the target candidate cell configuration used by the terminal is changed to unavailable comprises any one of:
in response to determining that the target candidate cell configuration is deactivated, determining that the target candidate cell configuration is changed to unavailable;
in response to receiving stop-using indication information sent by a network side device, determining that the target candidate cell configuration is changed to unavailable, wherein the stop-using indication information is used to indicate the terminal to stop using the target candidate cell configuration.

3. The method according to claim 2, further comprising any one of:
in response to receiving change indication information sent by the network side device, triggering the terminal to deactivate the target candidate cell configuration, wherein the change indication information is used to indicate the terminal to change the candidate cell configuration used;
in response to determining that a preset condition for a candidate cell configuration change is met, triggering the terminal to deactivate the target candidate cell configuration.

4. The method according to claim 1, wherein keeping or discarding the TA corresponding to the target candidate cell comprises:
keeping or discarding the TA corresponding to the target candidate cell based on the network configuration indication information sent by a network side device, wherein the network configuration indication information is used to indicate the terminal to keep or discard the TA corresponding to the target candidate cell; or
based on a protocol agreement, keeping or discarding the TA corresponding to the target candidate cell.

5. The method according to claim 1, wherein keeping or discarding the TA corresponding to the target candidate cell comprises:
according to whether there is an activated candidate cell in a target uplink timing group TAG, keeping or discarding the TA corresponding to the target candidate cell, wherein the target TAG is a TAG where the target candidate cell is located.

6. The method according to claim 5, wherein keeping or discarding the TA corresponding to the target candidate cell according to whether there is the activated candidate cell in the target uplink timing group TAG comprises:
in response to determining that there is the activated candidate cell in the target TAG, keeping the TA corresponding to the target candidate cell; and in response to determining that there is no activated candidate cell in the target TAG, discarding the TA corresponding to the target candidate cell.

7. The method according to claim 1, wherein keeping or discarding the TA corresponding to the target candidate cell comprises:
keeping or discarding the TA corresponding to the target candidate cell according to a cell type of the target candidate cell.

8. The method according to claim 7, wherein keeping or discarding the TA corresponding to the target candidate cell according to the cell type of the target candidate cell comprises:
when the cell type of the target candidate cell is a Secondary Cell (SCell), keeping the TA corresponding to the target candidate cell;
when the cell type of the target candidate cell is a Primary Cell (PCell) or a Primary Secondary Cell (PSCell), discarding the TA corresponding to the target candidate cell.

9. The method according to any one of claims 1 to 8, wherein keeping the TA corresponding to the target candidate cell comprises at least one of the following:
controlling a Time Alignment Timer (TAT) to continue running;
controlling the TAT to stop running, but keeping a TA value corresponding to the target candidate cell.

10. The method according to any one of claims 1 to 8, wherein discarding the TA corresponding to the target candidate cell comprises at least one of:
controlling a TAT to stop running;
determining that the TAT expires;
discarding a TA value corresponding to the target candidate cell;
controlling the TAT to stop running, and discarding the TA value corresponding to the target candidate cell;
determining that the TAT expires, and discarding the TA value corresponding to the target candidate cell.

11. A terminal behavior determination method, performed by a network side device, the method comprising:
determining that a terminal keeps or discards uplink timing TA corresponding to a target candidate cell.

12. The method according to claim 11, further comprising:
sending change indication information to the terminal, wherein the change indication information is used to indicate the terminal to change a candidate cell configuration used.

13. The method according to claim 11, further comprising:
sending stop-using indication information to the terminal, wherein the stop-using indication information is used to indicate the terminal to stop using a target candidate cell configuration.

14. The method according to claim 11, wherein determining that the terminal keeps or discards the uplink timing TA corresponding to the target candidate cell comprises:
determining, based on network configuration indication information sent by the network side device to the terminal, that the terminal keeps or discards the TA corresponding to the target candidate cell, wherein the network configuration indication information is used to indicate the terminal to keep or discard the TA corresponding to the target candidate cell; or
based on a protocol agreement, determining that the terminal keeps or discards the TA corresponding to the target candidate cell.

15. The method according to claim 11, wherein determining that the terminal keeps or discards the uplink timing TA corresponding to the target candidate cell comprises:
according to whether there is an activated candidate cell in a target uplink timing group TAG, determining that the terminal keeps or discards the TA corresponding to the target candidate cell, wherein the target TAG is a TAG where the target candidate cell is located.

16. The method according to claim 15, wherein determining that the terminal keeps or discards the TA corresponding to the target candidate cell according to whether there is the activated candidate cell in the target uplink timing group TAG comprises:
in response to determining that there is the activated candidate cell in the target uplink timing group TAG, determining that the terminal keeps the TA corresponding to the target candidate cell, wherein the target TAG is the TAG where the target candidate cell is located;
in response to determining that there is no activated candidate cell in the target TAG, determining that the terminal discards the TA corresponding to the target candidate cell.

17. The method according to claim 11, wherein determining that the terminal keeps or discards the uplink timing TA corresponding to the target candidate cell comprises:
determining, according to a cell type of the target candidate cell, that the terminal keeps or discards the TA corresponding to the target candidate cell.

18. The method according to claim 17, wherein determining, according to the cell type of the target candidate cell, that the terminal keeps or discards the TA corresponding to the target candidate cell comprises:
when the cell type of the target candidate cell is a Secondary Cell (SCell), determining that the terminal keeps the TA corresponding to the target candidate cell;
when the cell type of the target candidate cell is a Primary Cell (PCell) or a Primary Secondary Cell (PSCell), determining that the terminal discards the TA corresponding to the target candidate cell.

19. The method according to any one of claims 11 to 18, wherein determining that the terminal keeps the uplink timing TA corresponding to the target candidate cell comprises at least one of:
determining that the terminal controls a Timing Alignment Timer (TAT) to continue running;
determining that the terminal controls the TAT to stop running but keeps a TA value corresponding to the target candidate cell.

20. The method according to any one of claims 11 to 18, wherein determining that the terminal discards the uplink timing TA corresponding to the target candidate cell comprises at least one of:
determining that the terminal controls a TAT to stop running;
determining that the terminal determines that the TAT expires;
determining that the terminal discards a TA value corresponding to the target candidate cell;
determining that the terminal controls the TAT to stop running and discard the TA value corresponding to the target candidate cell;
determining that the terminal determines that the TAT expires and discards the TA value corresponding to the target candidate cell.

21. An uplink timing maintenance apparatus, applied to a terminal, the apparatus comprising:
a maintenance module configured to, in response to determining that a target candidate cell configuration used by the terminal is changed to unavailable, keep or discard a TA corresponding to a target candidate cell.

22. A terminal behavior determination apparatus, applied to a network side device, the apparatus comprising:
a determination module configured to determine that the terminal maintains or discards uplink timing TA corresponding to a target candidate cell.

23. An uplink timing maintenance apparatus, comprising:
a processor; and
a memory configured to store instructions executable by the processor;
wherein the processor is configured to perform the uplink timing maintenance method according to any one of claims 1 to 10.

24. A terminal behavior determination apparatus, comprising:
a processor; and
a memory configured to store instructions executable by the processor;
wherein the processor is configured to perform the terminal behavior determination method according to any one of claims 11 to 20.
